# EUROPÄISCHE PATENTSCHRIFT

(11) **EP 2 211 072 B1**
(45) Veröffentlichungstag und Bekanntmachung des Hinweises auf die Patenterteilung: **25.07.2018**
(21) Anmeldenummer: 10151037.8
(22) Anmeldetag: 19.01.2010
(51) Int. Cl.: F16F 9/04, F16F 15/027, B60N 2/50, B60N 2/52, B60G 17/04, B60G 99/00

(54) **Eine Masse mit einer Vorrichtung zum Federn der Masse und Verfahren zum Einstellen und/oder Betreiben einer Fluidfeder dieser Vorrichtung**
A Mass and a device for cushioning the mass and method for adjusting and/or operating a fluid cushion of said device
Une Masse et un dispositif d'amortissement de la masse et procédé de réglage et/ou de fonctionnement d'un ressort hydraulique dudit dispositif.

(30) Priorität: 21.01.2009 DE 102009005381
(43) Veröffentlichungstag der Anmeldung: 28.07.2010
(73) Patentinhaber: GRAMMER AG, 92224 Amberg (DE)
(72) Erfinder: Kolb, Jens, 92281 Königstein (DE); Haller, Erwin, 92262 Birgland (DE)
(74) Vertreter: Hannke, Christian

(56) Entgegenhaltungen:
- EP-A1- 0 304 618
- EP-A2- 0 197 317
- DE-B3-102005 011 856

## Beschreibung

Die Erfindung betrifft einerseits eine Vorrichtung zum Federn einer Masse mit einer Fluidfeder und mit einem Gestell, bei welcher die Fluidfeder derart zwischen der Masse und dem Gestell angeordnet ist, dass die Masse an dem Gestell gefedert und/oder gedämpft gelagert ist. Andererseits betrifft die Erfindung ein Verfahren zum Einstellen und/oder Betreiben einer Fluidfeder zum Federn einer Masse gegenüber einem Gestell, insbesondere zum Einstellen und/oder Betreiben einer Fluidfeder einer derartigen Vorrichtung zum Federn einer Masse.

Gattungsgemäße Vorrichtungen und Verfahren sind aus dem Stand der Technik bereits gut bekannt. Insbesondere existieren derartige Vorrichtungen als Federungssysteme für gefederte Fahrzeugsitze speziell an Nutzfahrzeugen, Lastkraftwagen und dergleichen. Derartige gefederte Fahrzeugsitze sind typischerweise auf einem Boden bzw. auf einem Bodenblech des jeweiligen Kraftfahrzeuges gelagert, wobei der Boden bzw. das Kraftfahrzeug selbst als festliegendes Gestell angesehen werden kann. Eine Sitzeinrichtung des Fahrzeugsitzes und/oder eine darauf sitzende Person können als zu federnde Masse betrachtet werden, wobei oftmals eine Luftfeder zum Federn einer solchen Masse gegenüber dem Gestell vorgesehen ist. Diese Luftfeder kann hierbei in einem Scherenlenkersystem des Fahrzeugsitzes integriert sein, welches eine sichere Führung, insbesondere eine geführte vertikale Aufwärts- bzw. Abwärtsbewegung der Sitzeinrichtung gewährleisten kann. Das Scherenlenkersystem kann zusätzlich mit einem Dämpfer ausgerüstet sein, um etwa besonders heftige Vertikalbewegungen zusätzlich dämpfen zu können.

Ein Beispiel für eine gattungsgemäße Gestaltung ist aus der DE 10 2004 054 325 B3 bekannt. Bei der dort vorgeschlagenen Gestaltung soll der Federungskomfort dadurch verbessert werden, dass die Höhe der Sitzfläche gegenüber dem Fahrzeugboden und die Beschleunigung der Sitzfläche in vertikaler Richtung erfasst wird. Anhand der entsprechenden Messdaten wird anschließend der Druck in der Luftfeder variiert. Mit anderen Worten wird in der DE 10 2004 054 325 B3 vorgeschlagen, in Abhängigkeit der Vertikalbeschleunigung sowie der Höhe der Fahrersitzfläche über dem Fahrzeugboden die Menge der in der Luftfeder gegebenen Luft zu variieren.

Aus der DD 220 674 A1 ist ein aktiver, elektrohydraulischer Schwingungsdämpfer bekannt, der parallel geschaltet zu einer Feder dämpfend auf einen Fahrzeugsitz wirken soll.

Des Weiteren ist aus der DD 223 835 A1 weiter ein Regler für ein hybrides Schwingungsschutzsystem mit Rückkopplung einer Absolutgeschwindigkeit eines Objektes bekannt, welches sich für Sitze einsetzen lässt und bei welchem die Beschleunigung des Sitzes Berücksichtigung findet.

Darüber hinaus ist aus der DE 601 21 688 T2 ein aktives Sitzfederungssystem für einen Sitz bekannt, der durch ein Scherengestänge über einem Sitzunterbau getragen wird. Zwischen dem Sitz und dem Sitzunterbau sind dabei ein Hydraulikkolben und ein Luftkissen vorgesehen. Die Luftmenge in dem volumenkonstanten Luftkissen wird durch einen Kompressor und durch eine Lüftung gesteuert. Die Gestaltung weist einen Beschleunigungsaufnehmer sowie einen Sitzpositionssensor auf, deren Messwerte von einer elektronischen Steuereinheit (ECU) bei der Ansteuerung des Kompressors und der Entlüftung berücksichtigt werden.

DE 10 2005 011856 B3 zeigt ein Federungssystem eines Fahrzeugsitzes, bei welchem zur vertikalen Federung zwischen einem schwingenden Teil und festem Teil eine Luftfeder angeordnet ist. Der Druck in dieser Luftfeder ist abhängig von der Masse.

Neben den vorstehend genannten Anwendungsbeispielen hinsichtlich Fahrzeugsitze kommen derartige Federungssysteme auch hinsichtlich weiterer technischen Ausgestaltungen vor, beispielsweise an einer Radaufhängung von Fahrzeugen, wie insbesondere Kraftfahrzeugen.

Es ist Aufgabe der Erfindung, gattungsgemäße Federungssysteme weiterzuentwickeln, sodass sich das Federungssystem insbesondere besonders schnell an sich verändernde Rahmenbedingungen anpassen kann.

Die Aufgabe der Erfindung wird von einer Vorrichtung zum Federn einer Masse mit einer Fluidfeder und mit einem Gestell gelöst, bei welcher die Fluidfeder derart zwischen der Masse und dem Gestell angeordnet ist, dass die Masse an dem Gestell gefedert und/oder gedämpft gelagert ist, und die Vorrichtung sich durch eine Zusatzfluidvolumeneinrichtung zum Bereitstellen eines zusätzlichen Fluidvolumens für die Fluidfeder auszeichnet, wobei die Zusatzfluidvolumeneinrichtung wenigstens zwei fluidisch miteinander verbindbare Fluidvolumenkammern mit einer gemeinsamen, verlagerbaren Kammerwand aufweist.

Vorteilhafter Weise weist die Zusatzfluidvolumeneinrichtung zwei fluidisch miteinander verbindbare Fluidvolumenkammern mit einer gemeinsamen, verlagerbaren Kammerwand auf, wodurch mittels einer geeigneten Druckmodulation hinsichtlich der beiden Fluidvolumenkammern insbesondere die Fluidfeder konstruktiv besonders einfach unterschiedlich eingestellt und betrieben werden kann.

Dadurch, dass die Zusatzfluidvolumeneinrichtung insbesondere mehr als eine Fluidvolumenkammer aufweist, kann sich die vorliegende Fluidfeder einerseits schneller an sich verändernde Rahmenbedingung anpassen. Andererseits kann die Fluidfeder auch wesentlich vielfältiger eingestellt werden, wenn eine erste Fluidvolumenkammer der Zusatzfluidvolumeneinrichtung und eine weitere Fluidvolumenkammer der Zusatzfluidvolumeneinrichtung miteinander fluidisch verbunden werden können.

Insofern wird die Aufgabe der Erfindung auch von einem Verfahren zum Einstellen und/oder Betreiben einer Fluidfeder zum Federn einer Masse gegenüber einem Gestell, insbesondere zum Einstellen und/oder Betreiben einer Fluidfeder der vorliegenden Vorrichtung, gelöst, bei welchem die Fluidfeder mit einer Fluidvolumenkammer einer Zusatzfluidvolumeneinrichtung fluidisch verbunden wird, wobei zum Einstellen und/oder Betreiben der Fluidfeder eine erste Fluidvolumenkammer der Zusatzfluidvolumeneinrichtung und eine weitere Fluidvolumenkammer der Zusatzfluidvolumeneinrichtung fluidisch miteinander verbunden oder fluidisch voneinander getrennt werden.

Insbesondere wenn die Fluidvolumenkammern fluidisch miteinander verbunden werden, können Verstellkräfte, welche im Zusammenhang mit einem Einstellen und/oder mit einem Betreiben der Fluidfeder auftreten können, vorteilhaft reduziert werden.

Als Fluid kann hierbei vorzugsweise ein Gas, idealerweise Luft, eingesetzt werden, wodurch die Fluidfeder besonders sensibel auf sich verändernde Rahmenbedingungen, wie etwa schlagartige Aufwärts- oder Abwärtsbewegungen bzw. Wankbewegungen eines Kraftfahrzeuges, reagieren kann.

Erfindungsgemäß ist es vorgesehen, dass die Fluidfeder mittels einer geeigneten Fluidleitung mit der Zusatzfluidvolumeneinrichtung fluidisch verbunden ist, sodass ein zusätzliches Fluidvolumen aus wenigstens einer der Fluidvolumenkammern der Zusatzfluidvolumeneinrichtung an der Fluidfeder zur Verfügung gestellt oder von der Fluidfeder abgezogen werden kann. Hierbei kann insbesondere vorgesehen sein, dass über die Fluidleitung auch ein Druckausgleich zwischen der Fluidfeder und zumindest einer der Fluidvolumenkammern der Zusatzfluidvolumeneinrichtung stattfinden kann.

Weiter erfindungsgemäß umfasst diese Fluidleitung ein Absperrventil, sodass die Fluidfeder bei Bedarf von der Zusatzfluidvolumeneinrichtung auch fluidisch getrennt werden kann.

Die vorliegende Vorrichtung insbesondere mit der Fluidfeder, dem Gestell und der schwingbaren Masse kann hierbei selbst ein einfach bauendes Federungssystem bilden oder in einem komplexen Federungssystem integriert sein. Vorzugsweise gestaltet die Vorrichtung ein konstruktiv einfaches Federungssystem speziell an einem Kraftfahrzeug.

Erfindungsgemäß ist es vorgesehen, dass die Masse einen beweglichen Teil eines Sitzes umfasst. Hierbei kann die Masse beispielsweise eine gegenüber dem Gestell schwingbare Sitzeinrichtung sein, auf der gegebenenfalls ein Fahrzeugführer Platz genommen hat.

Als Gestell kann vorliegend etwa ein Bodenblech einer Fahrzeugkarosserie vorgesehen sein, an welchem beispielsweise ein Scherenlenkersystem eines Fahrzeugsitzes befestigt ist. Insofern kann das Gestell als ungefederte Masse der Vorrichtung angesehen werden, im Gegensatz zu der gefederten Masse der Vorrichtung, beispielsweise in Gestalt der schwingbaren Sitzeinrichtung des Fahrzeugsitzes.

Dementsprechend sieht eine weitere vorteilhafte Ausgestaltung vor, dass die Fluidfeder mit einem Scherenlenkerarm eines Sitzes gekoppelt ist, mittels welchem eine gut geführte Aufwärts- oder Abwärtsbewegung einer Sitzeinrichtung baulich einfach realisiert werden kann.

Darüber hinaus kann die Masse alternativ auch ein Karosseriebauteil eines Fahrzeuges sein, welches vorteilhaft gefedert sein kann. Beispielsweise ist die Masse hierbei eine Fahrzeugkabine eines Nutzfahrzeugs, welche federnd an einem Fahrwerk des Nutzfahrzeugs gelagert werden soll.

Eine bevorzugte Ausführungsvariante sieht vor, dass wenigstens zwei Fluidvolumenkammern der Zusatzfluidvolumeneinrichtung über ein Druckausgleichsventil fluidisch miteinander verbindbar angeordnet sind. Mittels eines geeigneten Druckausgleichsventils kann eine Fluidverbindung zwischen den Fluidvolumenkammern der Zusatzfluidvolumeneinrichtung entweder geöffnet oder verschlossen werden, je nach dem welche Fluidfederfunktion an der Vorrichtung eingestellt werden soll.

Weitere vorteilhafte Einstellmöglichkeiten ergeben sich, wenn wenigstens zwei Fluidvolumenkammern der Zusatzfluidvolumeneinrichtung hinsichtlich ihres Fluidvolumens einstellbar sind.

Weisen wenigstens zwei Fluidvolumenkammern der Zusatzfluidvolumeneinrichtung eine gemeinsame, verlagerbare Kammerwand auf, kann ein besonders einfach aufgebautes Doppelkammersystem an der Zusatzvolumeneinrichtung bereitgestellt werden. Insbesondere können mittels einer einzigen Verlagerung der gemeinsamen Kammerwand beide Fluidvolumenkammern hinsichtlich ihres Kammervolumens gleichzeitig variiert und verstellt werden. Wird beispielsweise durch Verlagerung der Kammerwand eine erste Fluidvolumenkammer verkleinert, wird gleichzeitig eine zweite Fluidvolumenkammer vergrößert, wenn die Kammerwand beide Fluidvolumenkammern trennt.

Insofern ist es vorteilhaft, wenn wenigstens zwei Fluidvolumenkammern der Zusatzfluidvolumeneinrichtung durch einen Kolben getrennt sind, der eine gemeinsame, verlagerbare Kammerwand der Fluidvolumenkammer bildet.

Eine diesbezüglich besonders einfach gestaltete Ausführungsvariante sieht vor, dass die gemeinsame, verlagerbare Kammerwand von einem Kolbenboden eines Zylinders gebildet ist, wodurch baulich sehr einfach ein Doppelkammersystem hinsichtlich der Zusatzfluidvolumeneinrichtung bereitgestellt werden kann.

Der Kolbenboden bzw. die gemeinsame, verlagerbare Kammerwand können vorteilhafter Weise mit einer besonders geringen Verstellkraft verlagert werden, wenn über das Druckausgleichsventil zuvor ein Druckausgleich in den beiden Fluidvolumenkammern vorgenommen wurde. Insofern bringt die vorliegende Zusatzfluidvolumeneinrichtung, welche mit mehr als einer Fluidvolumenkammer ausgestattet ist, einen weiteren erheblichen Vorteil, da hierdurch bedingt das Ansprechverhalten eines Federungssystems weiter verbessert werden kann.

In diesem Zusammenhang ist es vorteilhaft, wenn die Zusatzfluidvolumeneinrichtung als Zweikammer-Zylinder mit einem steuerbaren Kolben ausgestattet ist. Hierdurch kann die vorliegende Zusatzfluidvolumeneinrichtung baulich besonders einfach bereitgestellt werden.

Umfasst die Zusatzfluidvolumeneinrichtung ein Stellglied zum Einstellen eines Fluidvolumens einer Fluidvolumenkammer, kann eine Einstellung bzw. ein Betreiben der Fluidfeder weiter verbessert werden.

Besonders einfach kann eine derartige Fluidvolumeneinstellung vorgenommen werden, wenn die Zusatzfluidvolumeneinrichtung ein Stellglied zum Verlagern einer gemeinsamen Kammerwand zweier Fluidvolumenkammern der Zusatzfluidvolumeneinrichtung umfasst.

Vorzugsweise kann das Stellglied direkt und aktiv die vorstehend beschriebene gemeinsame, verlagerbare Kammerwand bzw. den steuerbaren Kolben innerhalb der Zusatzfluidvolumeneinrichtung speziell hinsichtlich einer Nivellierung einer Sitzfläche und/oder hinsichtlich einer Verringerung einer Schwingungs-Exposition der Sitzfläche verlagern.

Dies kann um ein Vielfaches einfacher gelingen, wenn in den entsprechenden Fluidvolumenkammern gleiche Druckverhältnisse vorliegen. Hierdurch kann die gemeinsame, verlagerbare Kammerwand bzw. der steuerbare Kolben eine schwimmende Position innerhalb der Zusatzfluidvolumeneinrichtung einnehmen, wodurch einerseits der Leistungsbedarf eines Stellmotors reduziert werden kann. Oder andererseits kann vorliegend die Dynamik einer Regelung bzw. eine Regelgeschwindigkeit wesentlich erhöht werden.

Insofern ist es vorteilhaft, wenn die vorliegende Vorrichtung Mittel zum Reduzieren einer erforderlichen Verstellkraft zum Verstellen eines Kolbens der Zusatzfluidvolumeneinrichtung umfasst. Diese Mittel zum Reduzieren der erforderlichen Verstellkraft können baulich besonders einfach und zuverlässig durch zumindest eine weitere Fluidvolumenkammer ausgestaltet werden, wodurch die gemeinsame, verlagerbare Kammerwand bzw. der Kolben mit einer geringeren Verstellkraft verlagert werden kann.

In diesem Zusammenhang sieht eine vorteilhafte Verfahrensvariante vor, dass durch einen Druckausgleich innerhalb der Fluidvolumenkammern der Zusatzfluidvolumeneinrichtung eine erforderliche Verstellkraft eines Kolbens der Zusatzfluidvolumeneinrichtung reduziert wird.

Mittels einer derart aufgebauten Zusatzfluidvolumeneinrichtung kann die vorliegende Vorrichtung konstruktiv einfach als ein geschlossenes Fluidsystem aufgebaut sein. Insbesondere ist hierbei vorgesehen, dass sich die Federrate der Fluidfeder mittels einer entsprechenden Fluidvolumenmodulation an der Zusatzfluidvolumeneinrichtung einstellen lässt.

Ist es jedoch erforderlich, ein zusätzliches Fluidvolumen bereitstellen zu müssen, kann vorliegend auch ein offenes Fluidsystem zum Einsatz kommen, bei welchem, beispielsweise mittels einer geeigneten Pumpeinrichtung, die im Fluidsystem befindliche Fluidmenge erhöht werden kann. Mittels einer Ablasseinrichtung kann die Fluidmenge auch verringert werden.

Es kann auch vorgesehen sein, dass die Vorrichtung zusätzlich mit einem Dämpfer ausgestattet ist. Dies ist insbesondere bei einem Ausfall der Fluidfeder vorteilhaft, da die schwingende Masse dann zumindest noch mittels des Dämpfers gedämpft werden kann. Der Dämpfer kann hierbei zum Einen auch hydraulisch und zum Anderen semiaktiv oder aktiv geregelt ausgeführt sein.

Vorteilhafter Weise ist die Zusatzfluidvolumeneinrichtung mit der Fluidfeder fluidisch in Reihe schaltbar.

Des Weiteren ist es vorteilhaft, wenn die Vorrichtung Lagesensoren und/oder Beschleunigungssensoren umfasst. Mittels des Lagesensors kann etwa eine eingestellte Sitzhöhe der Sitzeinrichtung ermittelt werden. Insofern ist dieser speziell hinsichtlich einer Niveauregulierung beispielsweise einer Sitzeinrichtung vorteilhaft. Mittels des Beschleunigungssensors können die vom Gestell aus eingeleiteten Schwingungen ermittelt werden. Insofern ist dieser insbesondere bei einer Reduzierung einer Schwingungsexposition beispielsweise einer Sitzeinrichtung vorteilhaft. Anhand der mit den Sensoren gewonnenen Daten bzw. Betriebskennwerte kann die Zusatzvolumeneinrichtung entsprechend vorteilhaft gesteuert und/oder geregelt werden.

Insbesondere derartige Sensoren eigenen sich gut dazu, wenigstens einen relevanten Betriebskennwert hinsichtlich der vorliegenden Vorrichtung ermitteln zu können, anhand welchem insbesondere die Zusatzfluidvolumeneinrichtung eingestellt werden kann.

Insofern sieht eine weitere vorteilhafte Verfahrensvariante vor, dass wenigstens ein Betriebskennwert an einem Federungssystem der Fluidfeder ermittelt wird, und in Abhängigkeit des ermittelten wenigstens einen Betriebskennwertes eine Fluidvolumenänderung an den Fluidvolumenkammern der Zusatzfluidvolumeneinrichtung vorgenommen wird.

Insbesondere zum Ermitteln wenigstens eines Betriebskennwertes kann vorteilhafter Weise weiter eine geeignete Erfassung- und/oder Messeinrichtung vorgesehen sein. Entsprechende Betriebskennwerte können jedoch auch rechnerisch ermittelt werden. Beispielsweise kann ein relevanter Betriebskennwert in Abhängigkeit einer Beschleunigung der vorliegenden gefederten Masse gegenüber dem Gestell und/oder in Abhängigkeit einer Relativposition der Masse gegenüber dem Gestell ermittelt werden.

Beispielsweise hinsichtlich einer Ausgestaltung als Fahrzeugsitz entspricht beispielsweise die Relativposition der Sitzhöhe im Fahrzeug, sofern es sich hierbei um die vertikale Relativposition handelt, was vorzugsweise der Fall ist. In entsprechender Weise wird vorzugsweise die Beschleunigung die Vertikalbeschleunigung der Sitzeinrichtung gegenüber dem Gestell sein. In dieser bevorzugten Ausgestaltung wird in Abhängigkeit dieser Beschleunigung und dieser Relativposition das Sollvolumen der Zusatzfluidvolumenvorrichtung ermittelt und mittels einer Steuerungseinrichtung das Sollvolumen angesteuert.

In einer besonders zu bevorzugenden Ausgestaltung - insbesondere dies bezieht sich sowohl auf das Verfahren als auch auf die Vorrichtung - kann das Fluidvolumen der Zusatzfluidvolumenvorrichtung mittels einer Regelungseinrichtung geregelt werden.

Ferner kann die Vorrichtung durch eine Steuerungseinrichtung ergänzt sein, mittels welcher speziell die Zusatzvolumeneinrichtung in Abhängigkeit eines ermittelten Betriebskennwertes gesteuert bzw. geregelt werden kann.

Insbesondere die vorliegende Vorrichtung kann aber nicht nur hinsichtlich eines Federungssystems eines Fahrzeugsitzes vorteilhaft eingesetzt werden. Vielmehr eignet sie sich auch zur Gestaltung oder Ergänzung anderer Federungssysteme, beispielsweise auch bezüglich einer Radfederung bei Fahrzeugen, insbesondere Kraftfahrzeugen, wie etwa PKW, LKW oder NKW.

Weitere Vorteile, Ziele und Eigenschaften vorliegender Erfindung werden anhand nachfolgender Beschreibung anliegender Zeichnung erläutert, in welcher beispielhaft unterschiedliche Federungssysteme umfassend eine Zusatzfluidvolumeneinrichtung mit wenigstens zwei fluidisch miteinander verbindbaren Fluidvolumenkammern mit einer gemeinsamen, verlagerbaren Kammerwand dargestellt sind. Der Übersichtlichkeit halber kann in einzelnen Figuren für identische Bauteile bzw. Bauteilgruppen auf sich wiederholende Bezugszeichen verzichtet sein.

Es zeigen:
- Figur 1: schematisch eine Ansicht eines ersten Ausführungsbeispiels einer Vorrichtung zum Federn einer Masse in Gestalt einer Sitzeinrichtung mit einer Fluidfeder in Verbindung mit einer stufenlos einstellbaren Zusatzfluidvolumeneinrichtung in einer maximalen Komfortstellung;
- Figur 2: schematisch eine weitere Ansicht des ersten Ausführungsbeispiels in einer mittleren Komfortstellung;
- Figur 3: schematisch nochmals eine Ansicht des ersten Ausführungsbeispiels in einer geringeren Komfortstellung;
- Figur 4: schematisch eine Ansicht eines zweiten Ausführungsbeispiels einer Vorrichtung zum Federn einer Masse ebenfalls in Gestalt einer Sitzeinrichtung mit einer Fluidfeder in Verbindung mit einer in drei Stufen einstellbaren Zusatzfluidvolumeneinrichtung in einer ersten Stufe mit maximalen Komfort;
- Figur 5: schematisch eine Ansicht des zweiten Ausführungsbeispiels in einer zweiten Stufe mit einem mittleren Komfort;
- Figur 6: schematisch nochmals eine Ansicht des zweiten Ausführungsbeispiels in einer dritten Stufe mit einem geringeren Komfort;
- Figur 7: schematisch eine Ansicht eines weiteren Beispiels mit zwei Vorrichtungen zum Federn einer Masse in Gestalt einer Nutzfahrzeugkabine in Verbindung mit einer Zusatzfluidvolumeneinrichtung; und
- Figur 8: schematisch eine Detailansicht einer der Vorrichtungen zum Federn aus der Figur 7.

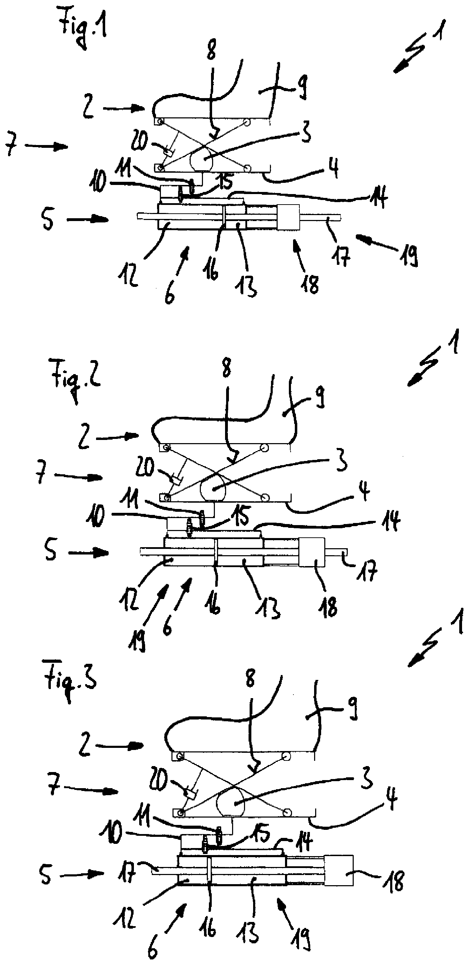

Die in den Figuren 1 bis 3 gezeigte Vorrichtung 1 zum Federn einer Masse 2 weist unter anderem eine Fluidfeder 3, ein Gestell 4 sowie eine Zusatzfluidvolumeneinrichtung 5 zum Bereitstellen eines zusätzlichen Fluidvolumens 6 für die Fluidfeder 3 auf. Mittels dieser Zusatzfluidvolumeneinrichtung 5 kann das zusätzliche Fluidvolumen 6 eingestellt werden, wodurch zumindest ein bestimmter Bereich einer Federsteifigkeit bzw. einer Federrate der Fluidfeder 3 an die jeweiligen Betriebsparameter angepasst werden kann.

Die Vorrichtung 1 bildet insgesamt ein Federungssystem 7 mit einem Scherenlenkersystem 8 aus, mittels welcher ein Verfahren zur aktiven Reduzierung einer Schwingungsexposition und zur Niveausteuerung in luftgefederten Fahrersitzen durchgeführt werden kann; und zwar beispielsweise für vertikale Schwingungseinleitungen. Ein derartiges Verfahren kann aber ebenso für luftunterstützte Längs- oder Seitenhorizontal-Federungen angewendet werden, wobei vorliegend die Fluidfeder 3 mit Luft bzw. Druckluft arbeitet. Dementsprechend wird als zusätzliches Fluidvolumen 6 der Einfachheit halber auch Luft eingesetzt.

Die gefederte Masse 2 ist in diesem ersten Ausführungsbeispiel eine Sitzeinrichtung 9 eines Fahrersitzes, auf welcher eine hier nicht näher gezeigte Person Platz nehmen kann, wobei die Person dann als eine zusätzliche gefederte Masse anzusehen ist. Das Gestell 4 ist hierbei als ein Karosserieboden ausgebildet und kann vorliegend als ungefederte Masse angesehen werden.

Die Fluidfeder 2 ist über eine Fluidleitung 10 mit der Zusatzfluidvolumeneinrichtung 5 verbunden, wobei in der Fluidleitung 10 ein Absperrventil 11 angeordnet ist.

Die Zusatzfluidvolumeneinrichtung 5 weist eine erste Fluidvolumenkammer 12 und eine zweite Fluidvolumenkammer 13 auf, die über eine geeignete Fluidverbindung 14 fluidisch miteinander verbunden werden können, wenn ein Druckausgleichsventil 15 in der Fluidverbindung 14 geöffnet ist.

Beide Fluidvolumenkammern 12, 13 werden durch eine gemeinsame, verlagerbare Kammerwand 16 räumlich voneinander getrennt. Die gemeinsame, verlagerbare Kammerwand 16 bildet hierbei einen Kolbenboden eines steuerbaren Kolbens 17 aus, wobei der steuerbare Kolben 17 von einem Stellglied 18 in Gestalt eines elektrischen Stellmotors der Zusatzfluidvolumeneinrichtung 5 stufenlos angetrieben werden kann.

Insofern ist die Zusatzfluidvolumeneinrichtung 5 baulich besonders einfach als ein Zweikammer-Zylinder 19 mit einem steuerbaren Kolben 17 ausgestaltet.

Für eine Grunddämpfung des Federungssystems 7 verfügt die Vorrichtung 1 noch über einen Dämpfer 20, wobei der Dämpfer 20 hydraulisch und/oder semiaktiv und/oder aktiv geregelt ausgeführt sein kann.

Dadurch, dass der Kolbenboden des steuerbaren Kolbens 17 beidseits von jeweils einer Fluidvolumenkammer 12 bzw. 13 umgeben ist, kann der Kolbenboden beidseits mit einem im Wesentlichen identischen Druck beaufschlagt werden, wenn über die Fluidverbindung 14 bei geöffneten Druckausgleichsventil 15 ein Druckausgleich hinsichtlich der beiden Fluidvolumenkammern 12 und 13 erfolgt ist. Auf Grund dieses Druckausgleichs kann eine Verlagerung des steuerbaren Kolbens 17 mittels des Stellglieds 18 mit wesentlich geringeren Verstellkräften erfolgen. Insofern kann insbesondere das Stellglied 18 hinsichtlich seiner Leistung schwächer ausgelegt werden und dementsprechend kleiner gebaut werden. Dies spart vorteilhafter Weise einerseits Bauraum und andererseits Kosten.

Um mittels der Vorrichtung 1 beispielsweise ein gewünschtes Höhenniveau der Sitzeinrichtung 9 einstellen zu können, kann der Fluidfeder 3 bei geöffnetem Absperrventil 11 über die Fluidleitung 10 zusätzlich Luft zugeführt werden, bis sich das gewünschte Höhenniveau eingestellt hat. Nach dem Nivellieren wird das Druckausgleichsventil 15 wieder geschlossen. Zuvor wurde in den beiden Fluidvolumenkammern 12 und 13 über die Fluidverbindung 14 bei geöffnetem Druckausgleichsventil 15 eine Druckgleichheit hergestellt und anschließend das Druckausgleichsventil 15 wieder verschlossen.

Die im praktischen Einsatz erforderlichen Regelbewegungen des Kolbens 17 zur Veränderung von Eigenschaften der Fluidfeder 3 und einer aktiven Regelung der Federung erfolgen nunmehr mit deutlich reduzierter erforderlicher Verstellkraft an dem Stellglied 18, da der Kolben 17 auf Grund der Druckgleichheit in den Fluidvolumenkammern 12 und 13 eine im Wesentlichen schwimmende Position einnehmen kann. Hierdurch kann die Leistungsabgabe des Stellglieds 18 reduziert werden und/oder die Dynamik der vorliegenden Regelung bzw. die Regelgeschwindigkeit kann vorteilhaft erhöht werden.

Ein weiteres wesentliches Merkmal der erfindungsgemäßen Vorrichtung 1 besteht darin, dass eine Anpassung der Federungseigenschaften, wie etwa die Federkennlinie, ohne eine externe Luftzufuhr bzw. Luftabfuhr erfolgen kann. Eine Anpassung bzw. Veränderung der Federkennlinie kann durch Verändern des Kammervolumens der ersten Fluidvolumenkammer 12 und einem gleichzeitigen Öffnen des Druckausgleichsventils 15 erfolgen. Anschließend wird das Druckausgleichsventil 15 wieder geschlossen und die Druckgleichheit in den beiden Fluidvolumenkammern 12 und 13 ist gewährleistet.

Eine Regelung eines Verstellvolumens kann auch mittels anderer Stellglieder erfolgen, wie beispielsweise einem Hydraulikzylinder oder ähnliche Kraft-Weg erzeugende Komponenten.

Darüber hinaus können mit einem unterschiedlich eingestellten Fluidvolumen, insbesondere hinsichtlich der ersten Fluidvolumenkammer 12, unterschiedliche Komforteinstellungen gewählt werden, wie in den einzelnen Figuren 1 bis 3 gut zu ersehen ist.

Gemäß der Darstellung nach der Figur 1 ist der steuerbare Kolben 17 derart innerhalb der Zusatzfluidvolumeneinrichtung 5 eingestellt, dass die erste Fluidvolumenkammer 12 idealerweise ein maximales Raumvolumen aufweist. Hierdurch kann auch ein maximaler Federungskomfort gewährleistet werden.

Gemäß der Darstellung nach der Figur 2 ist der steuerbare Kolben 17 innerhalb der Zusatzfluidvolumeneinrichtung 5 derart eingestellt, dass die erste Fluidvolumenkammer 12 ein mittleres Raumvolumen aufweist. Hierdurch kann noch ein mittlerer Federungskomfort gewährleistet werden.

Gemäß der Darstellung nach der Figur 3 ist der steuerbare Kolben 17 innerhalb der Zusatzfluidvolumeneinrichtung 5 jedoch derart eingestellt, dass die erste Fluidvolumenkammer 12 ein nur geringes Raumvolumen aufweist, wodurch ein noch geringerer Federungskomfort vorhanden ist.

Für eine Linksverlagerung und/oder Rechtsverlagerung des steuerbaren Kolbens 17 innerhalb der Zusatzfluidvolumeneinrichtung 5 kann das Druckausgleichsventil 15 geöffnet werden. Insbesondere bei der Rechtsverlagerung des steuerbaren Kolbens 17 innerhalb der Zusatzfluidvolumeneinrichtung 5 wird das Absperrventil 11 am besten kurz geschlossen, sodass nur die beiden Fluidvolumenkammern 12 und 13 fluidisch miteinander gekoppelt sind.

Ein Raumvolumen hinsichtlich der zweiten Fluidvolumenkammer 13 richtet sich entsprechend nach dem Raumvolumen der ersten Fluidvolumenkammer 12.

Sonstige Steuer-, Regel- und/oder Messeinrichtungen, wie beispielsweise Beschleunigungssensoren bzw. Lagesensoren, der vorliegende Vorrichtung sind der Übersichtlichkeit halber nicht noch zusätzlich eingezeichnet.

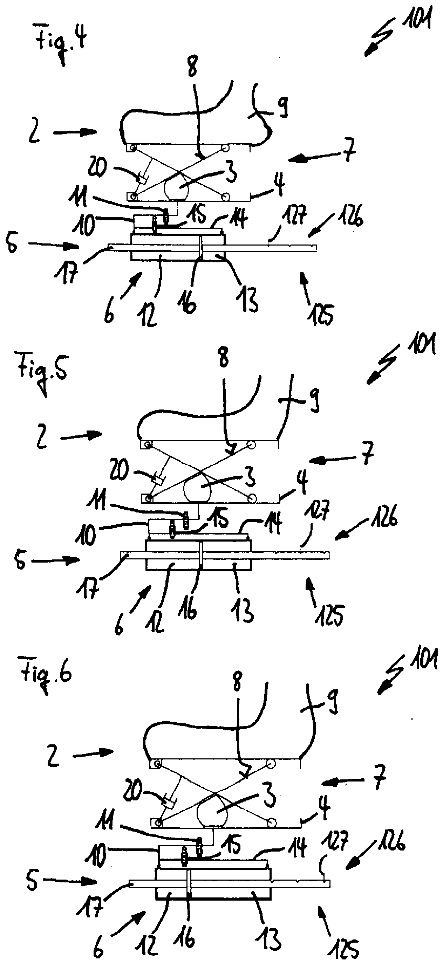

Die in den Figuren 4 bis 6 als zweites Ausführungsbeispiel gezeigte weitere Vorrichtung 101 zum Federn einer Masse 2 ist im Wesentlichen identisch aufgebaut wie die Vorrichtung 1 aus den Figuren 1 bis 3, sodass auch deren Verfahrensweise identisch ist. Insofern sind ähnliche Bauteile bzw. Bauteilgruppen auch identisch beziffert. Um Wiederholungen zu vermeiden, werden auch die zuvor ausführlich erläuterten Verfahrensvorgänge nicht nochmals im Zusammenhang mit dem zweiten Ausführungsbeispiel beschrieben.

In diesem zweiten Ausführungsbeispiel ist der steuerbare Kolben 17 des Zweikammer-Zylinders 19 in Abwandlung zum ersten Ausführungsbeispiel dreistufig ausgebildet. Insofern verfügt der steuerbare Kolben 17 an seinem Steuerende 125 über drei Rastmarkierungen 126, in welche eine Rastnase 127 entsprechend der gewählten Komforteinstellung einrasten kann.

Gemäß der Darstellung nach der Figur 4 ist die Rastnase 127 in eine weiter innenliegende der drei Rastmarkierungen 126 eingerastet, sodass der steuerbare Kolben 17 derart innerhalb der Zusatzfluidvolumeneinrichtung 5 eingestellt ist, dass die erste Fluidvolumenkammer 12 idealerweise ein maximales Raumvolumen aufweist. Hierdurch kann auch ein maximaler Federungskomfort gewährleistet werden.

Gemäß der Darstellung nach der Figur 5 ist die Rastnase 127 in eine mittlere der drei Rastmarkierungen 126 eingerastet, wodurch der steuerbare Kolben 17 innerhalb der derart eingestellt werden kann, dass die erste Fluidvolumenkammer 12 ein mittleres Raumvolumen aufweist. Somit kann noch ein mittlerer Federungskomfort gewährleistet werden.

Gemäß der Darstellung nach der Figur 6 ist die Rastnase 127 in eine noch weiter außenliegende der drei Rastmarkierungen 126 eingerastet. Insofern ist der steuerbare Kolben 17 derart eingestellt, dass die erste Fluidvolumenkammer 12 ein geringes Raumvolumen aufweist, wodurch ein noch geringerer Federungskomfort voreingestellt ist.

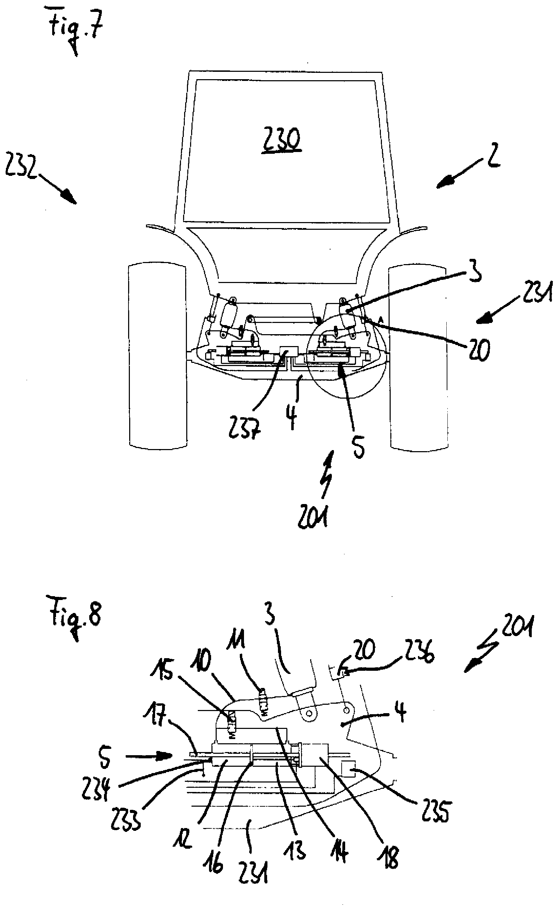

Bei dem dritten beispielhaft gezeigten Ausführungsbeispiel gemäß den Darstellungen der Figuren 7 und 8 ist die zu federnde Masse 2 der dort gezeigten alternativen Vorrichtung 201 im Wesentlichen als Fahrzeugkabine 230 ausgestaltet. Insofern unterscheidet sich die alternative Vorrichtung 201 im Wesentlichen durch die anders gestaltete Masse 2, insbesondere gegenüber dem ersten Ausführungsbeispiel, sodass auch die Verfahrensweise hinsichtlich der alternativen Vorrichtung 201 identisch ist. Aus diesen Gründen sind ähnliche Bauteile bzw. Bauteilgruppen auch identisch beziffert. Um auch hier Wiederholungen zu vermeiden, werden die zuvor ausführlich erläuterten Verfahrensvorgänge nicht nochmals im Zusammenhang mit dem dritten Ausführungsbeispiel beschrieben.

Das Gestell 4 ist hierbei als Fahrgestell 231 eines Nutzfahrzeugs 232 ausgestaltet. Die Vorrichtung 201 ist in diesem Ausführungsbeispiel doppelt vorhanden, wird im Wesentlichen jedoch an der Detailansicht gemäß der Figur 8 erläutert. Die Vorrichtung 201 kann hierbei insbesondere zur aktiven Reduzierung der Schwingungs-Exposition im Kabinenbereich, sowie zur Niveausteuerung bzw. zur aktiven Wankabstützung verwendet werden.

Die Fluidfeder 3 steht auch hier mittels einer Fluidleitung 10, welche ein Absperrventil 11 umfasst, mit der Zusatzfluidvolumeneinrichtung 5. Die Zusatzfluidvolumeneinrichtung 5 umfasst zwei Fluidvolumenkammern 12 und 13 und einen steuerbaren Kolben 17 mit einem Kolbenboden, der als gemeinsame, verlagerbare Kammerwand 16 vorhanden ist. Mittels des Stellglieds 18 kann der Kolben 17 stufenlos verstellt werden, wodurch die Fluidvolumenkammern 12 und 13 unterschiedlich groß eingestellt werden können. Die beiden Fluidvolumenkammern 12 und 13 sind auch hier fluidisch miteinander verbindbar, wofür eine geeignete Fluidverbindung 14 mit einem integrierten Druckausgleichsventil 15 vorgesehen ist.

Ebenfalls zu erkennen ist noch eine Luftdruckversorgung 233 mit einem Steuerventil 234, ein 3D-Beschleunigungssensor 235 an dem Fahrgestell 231, beispielhaft ein erster Lagesensor 236 im Bereich des Dämpfers 20 und eine Kontrolleinheit ECU 237, mittels welcher alle ermittelten Daten ausgewertet und entsprechend verwertet werden können.

Es versteht sich, dass die vorstehend erläuterten Ausführungsbeispiele lediglich erste Anwendungen beschreiben und die erfindungsgemäße Vorrichtung auch anders aufgebaute Federungssysteme bereitstellen kann.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung zum Federn einer Masse
- 2: zu federnde Masse
- 3: Fluidfeder
- 4: Gestell
- 5: Zusatzfluidvolumeneinrichtung
- 6: zusätzliches Fluidvolumen
- 7: Federungssystem
- 8: Scherenlenkersystem
- 9: Sitzeinrichtung
- 10: Fluidleitung
- 11: Absperrventil
- 12: erste Fluidvolumenkammer
- 13: zweite Fluidvolumenkammer
- 14: Fluidverbindung
- 15: Druckausgleichsventil
- 16: gemeinsame, verlagerbare Kammerwand
- 17: steuerbarer Kolben
- 18: Stellglied
- 19: Zweikammer-Zylinder
- 20: Dämpfer

- 101: weitere Vorrichtung zum Federn einer Masse
- 125: Steuerende
- 126: drei Rastmarkierungen

- 201: alternative Vorrichtung zum Federn einer Masse
- 230: Fahrzeugkabine
- 231: Fahrgestell
- 232: Nutzfahrzeug
- 233: Luftdruckversorgung
- 334: Steuerventil
- 235: 3D-Beschleunigungssensor
- 236: Lagesensor
- 237: Kontrolleinheit ECU

## Patentansprüche

1. Eine Masse mit einer Vorrichtung (1) zum Federn der Masse (2) mit einer Fluidfeder (3) und mit einem Gestell (4), bei welcher die Fluidfeder (3) derart zwischen der Masse (2) und dem Gestell (4) angeordnet ist, dass die Masse (2) an dem Gestell (4) gefedert und/oder gedämpft gelagert ist,
mit
einer Zusatzfluidvolumeneinrichtung (5) zum Bereitstellen eines zusätzlichen Fluidvolumens (6) für die Fluidfeder (3), wobei die Fluidfeder (3) mittels einer Fluidleitung (10) mit der Zusatzfluidvolumeneinrichtung (5) fluidisch verbunden ist, und wobei die Zusatzfluidvolumeneinrichtung (5) wenigstens zwei fluidisch miteinander verbindbare Fluidvolumenkammern (12, 13) mit einer gemeinsamen, verlagerbaren Kammerwand (16) aufweist, wobei Mittel zum Reduzieren einer erforderlichen Verstellkraft zum Verstellen eines Kolbens (17) der Zusatzfluidvolumeneinrichtung (5) vorgesehen sind, und wobei die Masse (2) einen beweglichen Teil (9) eines Sitzes umfasst, **dadurch gekennzeichnet, dass** die Fluidleitung ein Absperrventil (11) umfasst.

2. Masse mit einer Vorrichtung (1) nach Anspruch 1,
**dadurch gekennzeichnet, dass**
wenigstens zwei Fluidvolumenkammern (12, 13) der Zusatzfluidvolumeneinrichtung (5) zueinander über ein Druckausgleichsventil (15) fluidisch miteinander verbindbar angeordnet sind.

3. Masse mit einer Vorrichtung (1) nach Anspruch 1 oder 2,
**dadurch gekennzeichnet, dass**
wenigstens zwei Fluidvolumenkammern (12, 13) der Zusatzfluidvolumeneinrichtung (5) hinsichtlich ihres Fluidvolumens einstellbar sind.

4. Masse mit einer Vorrichtung (1) nach einem der vorangegangenen Ansprüche,
**dadurch gekennzeichnet, dass**
wenigstens zwei Fluidvolumenkammern (12, 13) der Zusatzfluidvolumeneinrichtung (5) durch den Kolben (17) getrennt sind, der eine gemeinsame, verlagerbare Kammerwand (16) der Fluidvolumenkammern (12, 13) bildet.

5. Masse mit einer Vorrichtung (1) nach einem der vorangegangenen Ansprüche,
**dadurch gekennzeichnet, dass**
die Zusatzfluidvolumeneinrichtung (5) als Zweikammer-Zylinder (19) mit einem steuerbaren Kolben (17) ausgestattet ist.

6. Masse mit einer Vorrichtung (1) nach einem der vorangegangenen Ansprüche,
**dadurch gekennzeichnet, dass**
die Zusatzfluidvolumeneinrichtung (5) ein Stellglied (18) zum Einstellen eines Fluidvolumens einer Fluidvolumenkammer (12, 13) umfasst.

7. Masse mit einer Vorrichtung (1) nach einem der vorangegangenen Ansprüche,
**dadurch gekennzeichnet, dass**
die Zusatzfluidvolumeneinrichtung (5) ein Stellglied (18) zum Verlagern einer gemeinsamen, verlagerbar angeordneten Kammerwand (16) zweier Fluidvolumenkammern (12, 13) der Zusatzfluidvolumeneinrichtung (5) umfasst.

8. Masse mit einer Vorrichtung (1) nach einem der vorangegangenen Ansprüche,
**dadurch gekennzeichnet, dass**
die Fluidfeder (3) mit einem Scherenlenkerarm (8) eines Sitzes gekoppelt ist.

9. Verfahren zum Einstellen und/oder Betreiben einer Fluidfeder (3) einer Vorrichtung (1) nach einem der vorangegangenen Ansprüche,
wobei
die Fluidfeder (3) mittels einer Fluidleitung (10) mit einer Fluidvolumenkammer (12, 13) einer Zusatzfluidvolumeneinrichtung (5) fluidisch verbunden wird, wobei die Fluidleitung (10) ein Absperrventil (11) umfasst, und wobei zum Einstellen und/oder Betreiben der Fluidfeder (3) eine erste Fluidvolumenkammer (12) der Zusatzfluidvolumeneinrichtung (5) und eine weitere Fluidvolumenkammer (13) der Zusatzfluidvolumeneinrichtung (5) fluidisch miteinander verbunden oder fluidisch voneinander getrennt werden, und wobei Mittel zum Reduzieren einer erforderlichen Verstellkraft zum Verstellen eines Kolbens (17) der Zusatzfluidvolumeneinrichtung (5) vorgesehen sind.

10. Verfahren nach Anspruch 9
**dadurch gekennzeichnet, dass**
wenigstens ein Betriebskennwert an einem Federungssystem (7) der Fluidfeder (3) ermittelt wird, und in Abhängigkeit des ermittelten wenigstens einen Betriebskennwertes eine Fluidvolumenänderung an den Fluidvolumenkammern (12, 13) der Zusatzfluidvolumeneinrichtung (5) vorgenommen wird.

11. Verfahren nach Anspruch 9 oder 10
**dadurch gekennzeichnet, dass**
durch einen Druckausgleich innerhalb der Fluidvolumenkammern (12, 13) der Zusatzfluidvolumeneinrichtung (5) eine erforderliche Verstellkraft des Kolbens (17) der Zusatzfluidvolumeneinrichtung (5) reduziert wird.

## Claims

1. Mass and a device (1) for cushioning said mass (2), which device comprises a fluid spring (3) and a frame (4), the fluid spring (3) being arranged between the mass (2) and the frame (4) such that the mass (2) is mounted on the frame (4) so as to be cushioned and/or damped, said device also comprising an additional fluid volume unit (5) for providing an additional fluid volume (6) for the fluid spring (3), the fluid spring (3) being fluidically connected to the additional fluid volume unit (5) by means of a fluid line (10), the additional fluid volume unit (5) comprising at least two fluidically interconnectable fluid volume chambers (12, 13) that have a common displaceable chamber wall (16), means for reducing a required adjustment force for adjusting a piston (17) of the additional fluid volume unit (5) being provided, and
the mass (2) comprising a movable part (9) of a seat, **characterised in that** the fluid line comprises a shut-off valve (11).

2. Mass and a device (1) according to claim 1,
**characterised in that**
at least two fluid volume chambers (12, 13) of the additional fluid volume unit (5) are arranged relative to one another so as to be fluidically interconnectable by means of a pressure compensation valve (15).

3. Mass and a device (1) according to claim 1 or 2,
**characterised in that**
at least two fluid volume chambers (12, 13) of the additional fluid volume unit (5) are adjustable with regard to the fluid volume thereof.

4. Mass and a device (1) according to any of the preceding claims, **characterised in that** at least two fluid volume chambers (12, 13) of the additional fluid volume unit (5) are separated by the piston (17), which piston forms a common displaceable chamber wall (16) of the fluid volume chambers (12, 13).

5. Mass and a device (1) according to any of the preceding claims, **characterised in that** the additional fluid volume unit (5) is designed as a two-chamber cylinder (19) comprising a controllable piston (17).

6. Mass and a device (1) according to any of the preceding claims, **characterised in that** the additional fluid volume unit (5) comprises an actuator (18) for adjusting a fluid volume of a fluid volume chamber (12, 13).

7. Mass and a device (1) according to any of the preceding claims, **characterised in that** the additional fluid volume unit (5) comprises an actuator (18) for displacing a displaceably arranged common chamber wall (16) of two fluid volume chambers (12, 13) of the additional fluid volume unit (5).

8. Mass and a device (1) according to any of the preceding claims
**characterised in that**
the fluid spring (3) is coupled to a scissor-type link arm (8) of a seat.

9. Method for adjusting and/or operating a fluid spring (3) of a device (1) according to any of the preceding claims,
wherein
the fluid spring (3) is fluidically connected to a fluid volume chamber (12, 13) of an additional fluid volume unit (5) by means of a fluid line (10), wherein the fluid line (10) comprises a shut-off valve (11), wherein a first fluid volume chamber (12) of the additional fluid volume unit (5) and a further fluid volume chamber (13) of the additional fluid volume unit (5) are fluidically interconnected or are fluidically separated from one another in order to adjust and/or operate the fluid spring (3), and wherein means for reducing a required adjustment force for adjusting a piston (17) of the additional fluid volume unit (5) are provided.

10. Method according to claim 9,
**characterised in that**
at least one operating characteristic value concerning a cushioning system (7) of the fluid spring (3) is determined, and the fluid volume of the fluid volume chambers (12, 13) of the additional fluid volume unit (5) is changed based on the at least one characteristic value determined.

11. Method according to claim 9 or 10,
**characterised in that**
a required adjustment force of the piston (17) of the additional fluid volume unit (5) is reduced by pressure compensation within the fluid volume chambers (12, 13) of the additional fluid volume unit (5).

## Revendications

1. Une masse et un dispositif (1) pour l'amortissement de la masse (2), comportant un ressort hydraulique (3) et comportant un châssis (4), le ressort hydraulique (3) étant disposé entre la masse (2) et le châssis (4) de telle sorte que la masse (2) est montée sur le châssis (4) sur ressort et/ou de manière amortie,
comportant un dispositif (5) à volume de fluide supplémentaire pour la fourniture d'un volume de fluide supplémentaire (6) pour le ressort hydraulique (3), le ressort hydraulique (3) étant relié de manière fluidique au dispositif (5) à volume de fluide supplémentaire au moyen d'une conduite de fluide (10), et le dispositif (5) à volume de fluide supplémentaire présentant au moins deux chambres de volume de fluide (12, 13) qui peuvent être reliées de manière fluidique l'une à l'autre avec une paroi de chambre (16) déplaçable, commune, étant prévus des moyens pour la réduction d'une force de déplacement requise pour le déplacement d'un piston (17) du dispositif (5) à volume de fluide supplémentaire et la masse (2) comportant une partie mobile (9) d'un siège, **caractérisée par le fait que** la conduite de fluide comporte une soupape d'arrêt (11).

2. Masse et un dispositif (1) selon la revendication 1,
**caractérisée par le fait que**
au moins deux chambres de volume de fluide (12, 13) du dispositif (5) à volume de fluide supplémentaire sont disposées pouvant être reliées de manière fluidique l'une à l'autre par une soupape d'équilibrage de pression (15).

3. Masse et un dispositif (1) selon l'une des revendications 1 ou 2,
**caractérisée par le fait que**
au moins deux chambres de volume de fluide (12, 13) du dispositif (5) à volume de fluide supplémentaire sont réglables en ce qui concerne leur volume de fluide.

4. Masse et un dispositif (1) selon l'une des revendications précédentes,
**caractérisée par le fait que**
au moins deux chambres de volume de fluide (12, 13) du dispositif (5) à volume de fluide supplémentaire sont séparées par le piston (17), qui forme une paroi de chambre (16) déplaçable, commune, des chambres de volume de fluide (12, 13).

5. Masse et un dispositif (1) selon l'une des revendications précédentes,
**caractérisée par le fait que**
le dispositif (5) à volume de fluide supplémentaire en tant que cylindre à deux chambres (19) est équipé d'un piston (17) commandable.

6. Masse et un dispositif (1) selon l'une des revendications précédentes,
**caractérisée par le fait que**
le dispositif (5) à volume de fluide supplémentaire comporte un actionneur (18) pour le réglage d'un volume de fluide d'une chambre de volume de fluide (12, 13).

7. Masse et un dispositif (1) selon l'une des revendications précédentes,
**caractérisée par le fait que**
le dispositif (5) à volume de fluide supplémentaire comporte un actionneur (18) pour le déplacement d'une paroi de chambre (16) agencée de façon déplaçable, commune, de deux chambres de volume de fluide (12, 13) du dispositif (5) à volume de fluide supplémentaire.

8. Masse et un dispositif (1) selon l'une des revendications précédentes,
**caractérisée par le fait que**
le ressort hydraulique (3) est couplé à un bras de commande de type à ciseaux (8) d'un siège.

9. Procédé de réglage et/ou de fonctionnement d'un ressort hydraulique (3) d'un dispositif (1) selon l'une des revendications précédentes,
dans lequel
le ressort hydraulique (3) est relié de manière fluidique à une chambre de volume de fluide (12, 13) d'un dispositif (5) à volume de fluide supplémentaire au moyen d'une conduite de fluide (10), la conduite de fluide (10) comportant une soupape d'arrêt (11), et, pour le réglage et/ou le fonctionnement du ressort hydraulique (3), une première chambre de volume de fluide (12) du dispositif (5) à volume de fluide supplémentaire et une autre chambre de volume de fluide (13) du dispositif (5) à volume de fluide supplémentaire sont reliées de manière fluidique l'une à l'autre ou sont séparées de manière fluidique l'une de l'autre, et étant prévus des moyens pour la réduction d'une force de déplacement requise pour le déplacement d'un piston (17) du dispositif (5) à volume de fluide supplémentaire.

10. Procédé selon la revendication 9,
**caractérisé par le fait que**
au moins un paramètre de fonctionnement est déterminé sur un système de suspension (7) du ressort hydraulique (3), et, en fonction de l'au moins un paramètre de fonctionnement déterminé, un changement de volume de fluide est effectué sur les chambres de volume de fluide (12, 13) du dispositif (5) à volume de fluide supplémentaire.

11. Procédé selon l'une des revendications 9 ou 10,
**caractérisé par le fait que**
par un équilibrage de pression à l'intérieur des chambres de volume de fluide (12, 13) du dispositif (5) à volume de fluide supplémentaire, une force de déplacement requise du piston (17) du dispositif (5) à volume de fluide supplémentaire est réduite.
